# EUROPEAN PATENT APPLICATION

(11) **EP 4 252 551 A1**
(43) Date of publication of application: **04.10.2023**
(21) Application number: 21898757.6
(22) Date of filing: 30.11.2021
(51) Int. Cl.: A23L 29/20, A23C 13/00, A23D 9/00, A23L 29/10, A23L 3/16, A23L 29/256, A23L 29/238, A23L 27/00

(54) **COMPOSITION FOR GELLED FOOD WITH SOFT MOUTHFEEL AND PREPARATION METHOD THEREFOR**

(30) Priority: 30.11.2020 KR 20200165161
(71) Applicant: CJ Cheiljedang Corporation, Seoul 04560 (KR)
(72) Inventor: LEE, Suk Young, Seoul 04560 (KR); JEONG, Ji Hyeon, Seoul 04560 (KR); SHIM, Hee Ryung, Seoul 04560 (KR); PARK, Hong Wook, Seoul 04560 (KR); KANG, Ki Moon, Seoul 04560 (KR)
(74) Representative: Bandpay & Greuter
(86) International application number: PCT/KR2021/017920
(87) International publication number: WO 2022/114932

(57) **Abstract**

The present application relates to a composition for a gelled food including vegetable cream, and a gelling agent which includes agar and guar gum, a gelled food including the composition for a gelled food, a method for preparing a composition for a gelled food, the method including (A) mixing a gelling agent which includes agar and guar gum in water to prepare a gelled product and (B) mixing the gelled product with vegetable cream to prepare a mixture, and a method for producing a gelled food, the method including heat sterilizing a composition for a gelled food produced by the method for producing a composition for a gelled food.

## Description

### TECHNICAL FIELD

The present application relates to a composition for a gelled food, a gelled food including the same, a method for producing a composition for a gelled food, and a method for producing a gelled food.

### BACKGROUND ART

Gelled foods such as jelly and puree are produced by placing a composition, in which various types of gelling agents, thickeners, additives, and the like are mixed, in a container, followed by cooling and gelling the composition. These gelled foods are used as frozen desserts, dishes, snacks, and the like, and are preferred by people of all ages and genders.

Meanwhile, such gelled foods may have various physical properties depending on a gelling agent added and composition thereof. For example, when gelatin is used as a gelling agent, if the addition amount of gelatin is increased to improve shape retainability, a gelled food is hardened, so that it is difficult for people with difficulty in chewing including the elderly to eat the gelled food. When the addition amount of gelatin is decreased to make it easier to swallow the gelled food, it may not achieve visual satisfaction due to degradation in shape retainability, or fluidity may excessively increase to cause eating difficult.

Japanese Patent Laid-Open Publication No. 2004-350680 discloses a food (jelly) suitable for people with impaired chewing and swallowing functions, but only discloses effects in that a gel-type composition has an excellent ability to form food bolus in the mouth, is less adhesive in the mouth, and has excellent water retentivity. Therefore, the food (jelly) itself does not have a soft or smooth mouthfeel, and when distributed at room temperature, there may be a problem in that the shape retainability of the food is weakened.

Therefore, there is a demand for a gelled food whose shape retainability is maintained to make it possible to distribute and eat the gelled food at room temperature, whose mouthfeel is soft or smooth to go down the throat smoothly at the time of eating at room temperature, and at the same time, whose sensory quality is excellent to have excellent mouthfeel, tactility, savor, or flavor quality.

### [Prior Art Document]

Japanese Patent Laid-Open Publication No. 2004-350680

### DISCLOSURE OF THE INVENTION

### TECHNICAL PROBLEM

The present application is to provide a composition for a gelled food, the composition for a gelled food with soft mouthfeel obtained by combining specific gums with specific ratios. Particularly, the present application is to provide a composition for a gelled food, the composition for providing a gelled food with soft, creamy, or smooth mouthfeel, which is different from the mouthfeel or properties and shape of a typical resilient jelly, a method for producing a composition for a gelled food, and a method for producing a gelled food.

### TECHNICAL SOLUTION

Hereinafter, a composition for a gelled food according to an embodiment of the present application will be described.

The embodiment of the present application may provide a composition for a gelled food, the composition including vegetable cream, and a gelling agent which includes agar and guar gum.

### <Vegetable cream>

The vegetable cream allows the composition for a gelled food to have emulsification stability, and serves to impart soft or smooth mouthfeel to a gelled food produced using the vegetable cream. In addition, the vegetable cream may impart mouthfeel of easy swallow, that is, easily going down the throat, to the gelled food.

The vegetable cream may include a vegetable fat and an emulsifier as main components. The vegetable fat is also referred to as vegetable oil or plant oil, and may be a fat which maintains a liquid state at room temperature.

Since vegetable cream including a vegetable fat and an emulsifier is used, it is possible to impart smooth mouthfeel to a gelled food, and when producing a gelled food which is water-soluble, the stirring of the composition for a gelled food may be facilitated.

The vegetable fat may include peanut oil, cottonseed oil, corn oil, olive oil, canola oil, coconut oil, soybean oil, coconut oil (palm oil, palm kernel oil), sunflower oil, almond oil, pistachio oil, pecan oil, walnut oil, avocado oil, grapeseed oil, perilla oil, sesame oil, or a combination thereof, but is not limited thereto. Specifically, the vegetable fat may include refined coconut oil.

In the vegetable cream, the vegetable fat may be included in an amount of 25 to 35 wt% based on the total weight of the vegetable cream. Specifically, the vegetable fat may be included in an amount within a range consisting of at least one lower limit selected from 25 wt%, 26 wt%, 27 wt%, 28 wt%, 29 wt%, and 30 wt%, and at least one upper limit selected from 35 wt%, 34 wt%, 33 wt%, 32 wt%, 31 wt%, and 30 wt% based on the total weight of the vegetable cream. For example, the content of the vegetable fat may be 25 to 35 wt%, 25 to 30 wt%, or 30 to 35 wt% based on the total weight of the vegetable cream.

When the content of the vegetable fat satisfies the above range, the dispersion stability of the composition for a gelled food may be improved, and soft or smooth mouthfeel may be imparted to a gelled food.

The emulsifier serves to disperse well the vegetable fat in the composition for a gelled food. In addition to the above function, the emulsifier may be added to the composition for a gelled food to affect the physical properties of a gelled food, such as mouthfeel, senses, and the like.

Any emulsifier may be used without limitation as long as it is permitted as a food additive. For example, glycerin fatty acid ester, sucrose fatty acid ester, sorbitan fatty acid ester, lecithin, casein, or the like may be used.

The emulsifier may be included in an amount of 2 to 4 wt% based on the total weight of the vegetable cream.

When the content of the emulsifier satisfies the above range, the vegetable fat is dispersed well in the composition for a gelled food may be improved, so that dispersion stability may be improved.

In addition to the vegetable fat and the emulsifier, the vegetable cream may further include water, sugar, skim milk powder, whey powder, or a combination thereof, but is not limited thereto.

The vegetable cream may be included in an amount within a range consisting of at least one lower limit selected from 7 wt%, 8 wt%, 9 wt%, and 10 wt%, and at least one upper limit selected from 14 wt%, 13 wt%, 12 wt%, and 11 wt% based on the total weight of the composition for a gelled food. For example, the vegetable cream may be included in an amount of 7 to 14 wt%, 8 to 14 wt%, 9 to 14 wt%, or 10 to 14 wt% based on the total weight of the composition for a gelled food.

When the content of the vegetable cream satisfies the above range, the soft mouthfeel of the gelled food may be expressed, so that it is possible to impart the mouthfeel of being smoothly melt in the mouth to the gelled food at the time of eating the gelled food.

### <Gelling agent>

The gelling agent included in the composition for a gelled food of the present application may include agar and guar gum. Specifically, the composition for a gelled food may include the gelling agent, and the gelling agent may necessarily include agar and guar gum.

The agar is to gel the composition for a gelled food, thereby imparting firmness thereto. By controlling the degree of gelling of the composition for a gelled food according to the type and content of the agar, it is possible to control the degree of firmness, or strength of a gelled food to impart a soft mouthfeel thereto.

The agar is a type of food that has been dried by freezing or compressing gelidium jelly, and the main ingredient thereof is agarose, which accounts for more than about 60% of the agar. Usually, the gelidium jelly is produced using a seaweed which belongs to the Gelidiaceae family, such as Gelidium, Pterocladia tenuis, Acanthopeltis japonica, or the like, or may be produced using a seaweed such as Gracilaria verrucosa or Meristotheca papulosa.

As described above, the agar has strong coagulation force and strong affinity with water, and thus, has strong ability to retain moisture in a predetermined form. When applied to a composition for a gelled food, the agar may control the physical properties of a gelled food, such as mouthfeel, or shape retainability. In particular, agar is essential in implementing shape retainability.

The agar may be included in an amount within a range consisting of at least one lower limit selected from 0.25 wt%, 0.26 wt%, 0.27 wt%, 0.28 wt%, 0.29 wt%, 0.3 wt%, 0.31 wt%, 0.32 wt%, 0.33 wt%, 0.34 wt%, and 0.35 wt%, and at least one upper limit selected from 0.7 wt%, 0.69 wt%, 0.68 wt%, 0.67 wt%, 0.66 wt%, 0.65 wt%, 0.64 wt%, 0.63 wt%, 0.62 wt%, 0.61 wt%, 0.6 wt%, 0.59 wt%, 0.58 wt%, 0.57 wt%, 0.56 wt%, 0.55 wt%, 0.54 wt%, 0.53 wt%, 0.52 wt%, 0.51 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, and 0.4 wt% based on the total weight of the composition for a gelled food. For example, the agar may be included in an amount of 0.25 to 0.7 wt%, 0.25 to 0.6 wt%, 0.25 to 0.5 wt%, 0.26 to 0.6 wt%, or 0.27 to 0.5 wt% based on the total weight of the composition for a gelled food.

When the content of the agar satisfies the above range, it is possible to control the physical properties, such as compression strength, fracturability, and/or hardness, of a gelled food produced using the composition for a gelled food to impart softness and smoothness to the mouthfeel of the gelled food. In addition, it is possible to improve the shape retainability of the gelled food to make the room temperature distribution stability and/or storage stability, or appearance excellent.

The guar gum serves to gel and solidify the composition for a gelled food, or serves as a thickener which controls the viscosity of a gelled food to impart stickiness thereto. The guar gum may be prepared using beans called guar beans, and the main component of the guar gum is a polysaccharide including galactomannan. Also, the guar gum is rich in soluble fiber, and thus, is low-calorie in terms of nutrition.

Since the guar gum controls the viscosity of the composition for a gelled food, the mouthfeel and the like of a gelled food produced using the composition for a gelled food may be improved. Particularly, the guar gum prevents the oil separation of the gelled food caused by the vegetable cream, and thus, may serve to improve the appearance and/or overall mouthfeel of the gelled food.

The guar gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, 0.27 wt%, 0.28 wt%, 0.29 wt%, and 0.3 wt%, and at least one upper limit selected from 0.8 wt%, 0.79 wt%, 0.78 wt%, 0.77 wt%, 0.76 wt%, 0.75 wt%, 0.74 wt%, 0.73 wt%, 0.72 wt%, 0.71 wt%, 0.7 wt%, 0.69 wt%, 0.68 wt%, 0.67 wt%, 0.66 wt%, 0.65 wt%, 0.64 wt%, 0.63 wt%, 0.62 wt%, 0.61 wt%, 0.6 wt%, 0.59 wt%, 0.58 wt%, 0.57 wt%, 0.56 wt%, 0.55 wt%, 0.54 wt% , 0.53 wt%, 0.52 wt%, 0.51 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, and 0.3 wt% based on the total weight of the composition for a gelled food. For example, the guar gum may be included in an amount of 0.1 to 0.8 wt%, 0.1 to 0.7 wt%, 0.1 to 0.6 wt%, 0.1 to 0.5 wt%, 0.15 to 0.8 wt%, 0.15 to 0.4 wt%, 0.2 to 0.4 wt%, or 0.27 to 0.4 wt% based on the total weight of the composition for a gelled food.

When the content of the guar gum satisfies the above range, it is possible to control the physical properties such as viscosity of a gelled food produced using the composition for a gelled food to impart softness and smoothness to the mouthfeel of the gelled food. Particularly, it is possible to prevent oil separation caused by vegetable cream, so that the appearance, color feel, and/or mouthfeel of the gelled food may be improved.

Particularly, when the agar and the guar gum are used in combination, it is possible to prevent the oil separation of the gelled food, control viscosity, control compression strength, fracturability, and/or hardness, or control brightness (L* value), so that there is an effect of providing a gelled food with a soft mouthfeel or a smooth mouthfeel, which is differentiated from a food such as a typical resilient jelly.

In addition, a gelled food produced using the composition for a gelled food has excellent shape retainability as well as a soft or smooth mouthfeel as described above, so that there is an effect in that the room-temperature distribution stability and storage stability of the gelled food are excellent, and at the same time, mouthfeel is excellent when eating the gelled food.

In addition, the gelling agent may further include at least one selected from locust bean gum, gelatin, and a tara gum, in addition the agar and the guar gum.

Since one or any suitable combination of the locust bean gum, the gelatin, and/or the tara gum is selected and included as a gelling agent used in the composition for a gelled food, the physical properties, such as mouthfeel, appearance, shape retainability, and/or storage stability of the gelled food may be improved.

The locust bean gum may control the adhesiveness or viscosity of a gelled food produced using the composition for a gelled food, and particularly, may enhance emulsification stability, and furthermore, may serve to improve the tactility of the gelled food.

The locust bean gum may be obtained by collecting the same from a carob tree which belongs to the legume family, and then separating and purifying an endosperm portion. The main ingredient of the locust bean gum may include a neutral polysaccharide composed of mannose and galactose. In addition, when heated, the locust bean gum is dissolved transparently and becomes mucus with good water retaining force, so that the above effect may be increased when used together with other gelling agents, thickeners, or stabilizers.

The locust bean gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, and 0.27 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, 0.29 wt%, 0.28 wt%, and 0.27 wt% based on the total weight of the composition for a gelled food. For example, the locust bean gum may be included in an amount of 0.1 to 0.5 wt%, 0.1 to 0.4 wt%, 0.15 to 0.5 wt%, 0.15 to 0.4 wt%, 0.15 to 0.3 wt%, 0.15 to 0.29 wt%, 0.15 to 0.27 wt%, or 0.27 to 0.5 wt% based on the total weight of the composition for a gelled food.

When the content of the locust bean gum satisfies the above range, it is possible to control the physical properties such as viscosity of the composition for a gelled food to impart softness and smoothness to the mouthfeel of a gelled food produced using the composition for a gelled food. Particularly, emulsification stability may be enhanced, and furthermore, the gelled food may be improved.

The gelatin may impart resilience to a gelled food produced using the composition for a gelled food to provide chewy mouthfeel thereto, and may also solidify the gelled food to impart firmness thereto since the gelatin has strong coagulation force.

The gelatin is a kind of induced protein obtained by treating collagen with hot water, or acid or alkali. Gelatin expands in cold water, but dissolves in hot water to become a sol, and at room temperature, may become a gel with elasticity.

The gelatin may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, and 0.27 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, 0.29 wt%, 0.28 wt%, and 0.27 wt% based on the total weight of the composition for a gelled food. For example, the gelatin may be included in an amount of 0.1 to 0.5 wt%, 0.1 to 0.4 wt%, 0.15 to 0.5 wt%, 0.15 to 0.4 wt%, 0.15 to 0.3 wt%, 0.15 to 0.29 wt%, 0.15 to 0.27 wt%, or 0.27 to 0.5 wt% based on the total weight of the composition for a gelled food.

When the content of the gelatin satisfies the above range, it is possible to impart suitable resilience to a gelled food produced using the composition for a gelled food to maintain shape retainability, and at the same time, may impart a soft mouthfeel or a smooth mouthfeel to the gelled food.

The tara gum may control the adhesiveness or viscosity of a gelled food produced using the composition for a gelled food, and particularly, may enhance emulsification stability to prevent oil separation of the gelled food, and may improve the tactility of the gelled food.

The tara gum may be obtained by pulverizing an endosperm portion of a tara seed of Actinidiaceae, and may include a polysaccharide composed of mannose and galactose as the main component. In addition, tara gum completely melts at a high temperature to become a solution having a high viscosity, and the aqueous solution has features such as acid resistance, heat resistance, or salt tolerance.

The tara gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, and 0.27 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, 0.29 wt%, 0.28 wt%, and 0.27 wt% based on the total weight of the composition for a gelled food. For example, the tara gum may be included in an amount of 0.1 to 0.5 wt%, 0.1 to 0.4 wt%, 0.15 to 0.5 wt%, 0.15 to 0.4 wt%, 0.15 to 0.3 wt%, 0.15 to 0.29 wt%, 0.15 to 0.27 wt%, or 0.27 to 0.5 wt% based on the total weight of the composition for a gelled food.

When the content of the tara gum satisfies the above range, it is possible to control the physical properties such as viscosity of a gelled food produced using the composition for a gelled food to impart softness and smoothness to the mouthfeel of the gelled food. Particularly, emulsification stability may be enhanced, and furthermore, the gelled food may be improved.

The total content of the gelling agent may be a content consisting of at least one lower limit selected from 0.5 wt%, 0.55 wt%, 0.6 wt%, 0.65 wt%, 0.7 wt%, 0.75 wt%, and 0.8 wt%, %, and at least one upper limit selected from 1.2 wt%, 1 wt%, 0.95 wt%, 0.9 wt%, 0.89 wt%, 0.88 wt%, 0.87 wt%, 0.86 wt%, 0.85 wt%, 0.84 wt%, 0.83 wt%, 0.82 wt%, 0.81 wt%, and 0.8 wt% based on the total weight of the composition for a gelled food. For example, the total content of the gelling agent may be a content of 0.5 to 1.2 wt%, 0.5 to 1 wt%, 0.5 to 0.9 wt%, 0.5 to 0.85 wt%, 0.6 to 0.85 wt%, 0.7 to 0.85 wt%, 0.8 to 0.85 wt%, 0.5 to 0.81 wt%, 0.55 to 0.85 wt%, 0.55 to 0.81 wt%, or 0.8 to 0.81 wt% based on the total weight of the composition for a gelled food.

When the total content of the gelling agent satisfies the above range, it is possible to control the viscosity of a gelled food produced using the composition for a gelled food to impart a soft or smooth mouthfeel thereto, and may improve shape retainability to improve room-temperature distribution stability or storage stability.

### <Additive such as acidulant, flavoring, or sweetener>

The composition for a gelled food may further include an additive, if necessary. For example, the composition for a gelled food may further include, as an additive, at least one selected from an acidulant, a flavoring, a sweetener, an acidity regulator, fruit concentrate, lactic acid bacteria, a vitamin, an excipient, a colorant, an antioxidant, dietary fiber, or a combination thereof.

The acidulant may control the mouthfeel and/or sensory quality of a gelled food produced using the composition for a gelled food, and furthermore, may serve to control the pH of the gelled food, and to impart preservation and/or antioxidation to the gelled food.

The acidulant may include an organic acid, and the organic acid may be, for example, citric acid, hydrous citric acid, gluconic acid, tartaric acid, malic acid, fumaric acid, lactic acid, adipic acid, or glacial acetic acid, but is not limited thereto.

The acidulant may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, the acidulant may be included in an amount of 0.005 to 0.5 wt%, or 0.01 to 0.5 wt% based on the total weight of the composition for a gelled food.

When the content of the acidulant satisfies the above range, it is possible to control the mouthfeel and/or sensory quality of a gelled food produced using the composition for a gelled food, and furthermore, to control the pH of the gelled food, and to impart preservation and/or antioxidation to the gelled food.

The flavoring may serve to improve the savor, or flavor of a gelled food produced using the composition for a gelled food. Any flavoring may be used without limitation as long as it is a natural flavoring or synthetic flavoring which may be added to food.

The flavoring may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, and 0.1 wt%, and at least one upper limit selected from 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, the flavoring may be included in an amount of 0.005 to 0.5 wt%, or 0.01 to 0.5 wt% based on the total weight of the composition for a gelled food.

When the content of the flavoring satisfies the above range, it is possible to improve the savor or flavor of a gelled food.

The sweetener is to impart sweetness to a gelled food produced using the composition for a gelled food, and any natural sweetener or synthetic sweetener, such as sugar, glucose, fructose, lactose, honey, syrup, or oligosaccharide, may be used without limitation as long as it may be added to food.

The sweetener may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, and 10 wt%, and at least one upper limit selected from 30 wt%, 28 wt%, 26 wt%, 24 wt%, 22 wt%, 20 wt%, 18 wt%, 16 wt%, 14 wt%, 12 wt%, 10 wt%, 8 wt%, 6 wt%, 4 wt%, 2 wt%, 1 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, the sweetener may be included in an amount of 0.005 to 30 wt%, 0.005 to 20 wt%, 0.005 to 10 wt%, 0.005 to 5 wt%, 0.005 to 1 wt%, 0.005 to 0.5 wt%, 0.01 to 0.5 wt%, 1 to 30 wt%, 5 to 30 wt%, or 10 to 30 wt% based on the total weight of the composition for a gelled food.

When the content of the sweetener satisfies the above range, it is possible to impart sweetness to a gelled food produced using the composition for a gelled food to improve the savor or flavor of the gelled food.

In addition to the acidulant, the flavoring, and the sweetener, the composition for a gelled food may further include an additive such as an acidity regulator, fruit concentrate, lactic acid bacteria, a vitamin, an excipient, a colorant, an antioxidant, dietary fiber, or a combination thereof.

As the composition for a gelled food further includes the additives as described above, it is possible to impart physical properties or features required for a gelled food produced using the composition for a gelled food.

As additives which may be included in the composition for a gelled food, any additive may be used without limitation as long as it is disclosed in the Korean Food Codex, or commonly included in food.

When the additives are included in the composition for a gelled food, each of the additives may be included in an amount within a range consisting of at least one lower limit selected from 0.005 wt%, 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.5 wt%, and 1 wt%, and at least one upper limit selected from 10 wt%, 8 wt%, 6 wt%, 5 wt%, 4 wt%, 2 wt%, 1 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, 0.3 wt%, and 0.2 wt% based on the total weight of the composition for a gelled food. For example, each of the additives may be included in an amount of 0.005 to 10 wt%, 0.005 to 5 wt%, 0.005 to 1 wt%, 0.005 to 0.5 wt%, 0.01 to 0.5 wt%, 0.1 to 10 wt%, or 1 to 5 wt% based on the total weight of the composition for a gelled food.

When the content of each of the additives satisfies the above range, it is possible to provide a gelled food to which features of each additive are imparted.

Another embodiment of the present application may provide a gelled food.

The gelled food may include the above-described composition for a gelled food.

The gelled food may be understood as including a gelled food produced using the composition for a gelled food.

The gelled food is a concept including all foods having a gel form (shape). In general, gel may mean something having a certain form in a solid or semi-solid state obtained by heating or cooling a sol in which solid particles are dispersed in a liquid. The gel may mean that the sol is gelled by forming a secondary bond such as a chemical bond.

The gelled food is not limited as long as it is one of the above foods, but may include, for example, jelly, spread, or pudding.

In addition, the gelled food may include a food which may be distributed at room temperature, or it may include a food which may be eaten at room temperature.

The gelled food according to the present application may be substantially oil separation. The oil separation includes a phenomenon in which components of a fat included in the gelled food are separated from water-soluble components, and is a concept broadly including an oil-oil separation phenomenon. However, in the present application, the oil separation may mean an oil-water separation phenomenon, in particular.

The gelled food includes water as a remainder other than vegetable cream and a gelling agent, so that the vegetable cream containing a fat component and an aqueous solution component may be naturally separated.

However, when oil separation occurs in the gelled food, two layers are generally formed, for example, a fat-soluble layer (containing relatively more fat) formed by fat which has been separated, and a water-soluble layer (containing relatively less fat) from which fat has been released, so that undesirable layer separation may occur, or an appearance problem may occur. In addition, when there is excessive oil separation, the composition of a fat-soluble layer and the composition of a water-soluble layer become different from each other, so that the fat-soluble layer and the water-soluble layer have different physical properties or qualities from each other, which may affect the mouthfeel, savor, or flavor of the gelled food.

Therefore, through specific types and mixing ratios of the vegetable cream and the gelling agent described above, the gelled food may provide a food in which such oil separation may not substantially occur.

Specifically, the meaning of the fact that the oil separation of the gelled food does not substantially occur may include that the oil separation of the gelled food does not occur at all. That is, in the gelled food, layer separation into a fat-soluble layer and a water-soluble layer, which are formed by the separation of a fat, may not occur. In addition, the meaning of the fact that the oil separation of the gelled food does not substantially occur may include, in other words, that the difference in brightness L* between the CIE color coordinate value of an upper layer portion and that of a lower layer portion of the gelled food is 0.8 or less. For example, the difference in brightness L* between the CIE color coordinate value of an upper layer portion and that of a lower layer portion of the gelled food is 0.8 or less, 0.7 or less, 0.6 or less, 0.5 or less, 0.4 or less, 0.3 or less, 0.2 or less, 0.1 or less, or 0.05 or less. At this time, the upper layer portion may mean a portion from the upper end of a gelled food to a point of 25% of the total height in a vertical direction, and the lower layer portion may mean a portion from the lower end(bottom)of the gelled food to a point of 25% of the total height in the vertical direction.

That is, when the difference in brightness L* between the CIE color coordinate value of the upper layer portion and that of the lower layer portion of the gelled food is 0.8 or less, it may mean that there is substantially no oil separation.

The compression strength of the gelled food may be within a range consisting of at least one lower limit selected from 0.6 N, 0.62 N, 0.64 N, 0.66 N, 0.68 N, 0.7 N, 0.72 N, 0.74 N, 0.76 N, 0.78 N, 0.8 N, and 0.82 N, and at least one upper limit selected from 2.5 N, 2.4 N, 2.38 N, 2.36 N, 2.34 N, 2.32 N, 2.3 N, 2.28 N, 2.26 N, 2.24 N, 2.22 N, 2.2 N, 2 N, 1.98 N, 1.96 N, 1.94 N, 1.92 N, 1.9 N, 1.88 N, 1.86 N, 1.84 N, 1.82 N, 1.8 N, 1.78 N, 1.76 N, 1.74 N, 1.72 N, 1.7 N, 1.68 N, 1.66 N, 1.64 N, 1.62 N, 1.6 N, 1.58 N, and 1.56 N. For example, the compression strength of the gelled food may be 0.6 to 2.5 N, 0.6 to 2.4 N, or 0.6 to 2.2 N.

The compression strength of the gelled food may be a measurement value obtained from a Texture Analyzer (TA) analysis result, specifically, a measurement value obtained from a TA XT-plus (Stable Micro System, UK) analysis result.

The TA analysis conditions are as shown in Table 1 below.

**[Table 1]**

| Items | Conditions |
|---|---|
| Sample amount | 90 g |
| Probe | Circular shape, diameter 35 mm |
| Pre-test speed | 5 mm/sec |
| Test-speed | 2 mm/sec |
| Post-test speed | 2 mm/sec |
| Pressure | 98% compression |
| Height | 50 mm |

When the compression strength of the gelled food satisfies the above range, the gelled food may have a soft or smooth mouthfeel, and accordingly, may have a natural mouthfeel at the time of eating to go down the throat smoothly, and to have an easy-to-swallow mouthfeel.

The hardness of the gelled food may be within a range consisting of at least one lower limit selected from 8.2 N, 8.3 N, 8.4 N, 8.5 N, 8.6 N, 8.7 N, 8.8 N, 8.9 N, and 9 N, and at least one upper limit selected from 11.5 N, 11.3 N, 11 N, 10.9 N, 10.8 N, 10.5 N, 10.4 N, 10.3 N, 10.2 N, 10.1 N, and 10 N. For example, the hardness of the gelled food may be 8.2 to 11.5 N, or 8.2 to 10.4 N.

The hardness (degree of firmness) of the gelled food may be a measurement value obtained from a Texture Analyzer (TA) analysis result, specifically, a measurement value obtained from a TA XT-plus (Stable Micro System, UK) analysis result. The TA analysis conditions are as shown in Table 1 above.

When the hardness of the gelled food satisfies the above range, the shape retainability of the gelled food is excellent, and accordingly, the room-temperature distribution stability and/or storage stability of the gelled food may be excellent. In addition, the gelled food may have a soft or smooth mouthfeel, and accordingly, may have a natural mouthfeel at the time of eating to go down the throat smoothly, and to have an easy-to-swallow mouthfeel.

Another embodiment of the present application may provide a method for producing a composition for a gelled food.

The method for producing a composition for a gelled food may include (A) mixing a gelling agent which includes agar and guar gum in water to prepare a gelled product, and (B) mixing the gelled product with vegetable cream to prepare a mixture.

First, Step (A) may include a step of mixing a gelling agent which includes agar and guar gum, which are powder raw materials, with water. At this time, the water may include purified water.

Step (A) may include a step of stirring after mixing the gelling agent with water. Since the step of stirring is included, the gelling agent is well dispersed and mixed in water, so that a gelled product having a constant viscosity may be prepared.

At this time, Step (A) may include a step of maintaining a gelling temperature after mixing the gelling agent with water. At this time, the gelling temperature may be within a range consisting of at least one lower limit selected from 80°C, 81°C, 82°C, 83°C, 84°C, 85°C, 86°C, 87°C, 88°C, 89°C, and 90°C, and at least one upper limit selected from 100°C, 99°C, 98°C, 97°C, 96°C, 95°C, 94°C, 93°C, 92°C, 91°C, and 90°C. When the above gelling temperature is maintained in Step (A), the formation of the gelled product may be facilitated, and in particular, the physical properties, such as compression strength, fracturability, hardness, and viscosity, of a gelled food produced using the composition for a gelled food may be controlled to impart a soft mouthfeel or a smooth mouthfeel to the gelled food.

Step (A) may include a step of mixing a gelling agent with water, the gelling agent including 0.25 to 0.7 wt% of the agar and 0.1 to 0.8 wt% of the guar gum based on the total weight of the composition for a gelled food, and then stirring the mixture while maintaining a gelling temperature to prepare a gelled product.

Particularly, when the gelling agent including agar and guar gum is added in Step (A), the agar may be included in an amount within a range consisting of at least one lower limit selected from 0.25 wt%, 0.26 wt%, 0.27 wt%, 0.28 wt%, 0.29 wt%, 0.3 wt%, 0.31 wt%, 0.32 wt%, 0.33 wt%, 0.34 wt%, and 0.35 wt%, and at least one upper limit selected from 0.7 wt%, 0.69 wt%, 0.68 wt%, 0.67 wt%, 0.66 wt%, 0.65 wt%, 0.64 wt%, 0.63 wt%, 0.62 wt%, 0.61 wt%, 0.6 wt%, 0.59 wt%, 0.58 wt%, 0.57 wt%, 0.56 wt%, 0.55 wt%, 0.54 wt%, 0.53 wt%, 0.52 wt%, 0.51 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, and 0.4 wt% based on the total weight of the composition for a gelled food. For example, the agar may be included in an amount of 0.25 to 0.7 wt%, 0.25 to 0.6 wt%, 0.25 to 0.5 wt%, 0.26 to 0.6 wt%, or 0.27 to 0.5 wt% based on the total weight of the composition for a gelled food.

When the content of the agar satisfies the above range, it is possible to control the physical properties, such as compression strength, fracturability, and/or hardness, of a gelled food produced using the composition for a gelled food to impart softness and smoothness to the mouthfeel of the gelled food. In addition, it is possible to improve the shape retainability of the gelled food to make the room temperature distribution stability and/or shape retainability, or appearance excellent.

In addition, the guar gum may be included in an amount within a range consisting of at least one lower limit selected from 0.1 wt%, 0.11 wt%, 0.12 wt%, 0.13 wt%, 0.14 wt%, 0.15 wt%, 0.16 wt%, 0.17 wt%, 0.18 wt%, 0.19 wt%, 0.2 wt%, 0.21 wt%, 0.22 wt%, 0.23 wt%, 0.24 wt%, 0.25 wt%, 0.26 wt%, 0.27 wt%, 0.28 wt%, 0.29 wt%, and 0.3 wt%, and at least one upper limit selected from 0.8 wt%, 0.79 wt%, 0.78 wt%, 0.77 wt%, 0.76 wt%, 0.75 wt%, 0.74 wt%, 0.73 wt%, 0.72 wt%, 0.71 wt%, 0.7 wt%, 0.69 wt%, 0.68 wt%, 0.67 wt%, 0.66 wt%, 0.65 wt%, 0.64 wt%, 0.63 wt%, 0.62 wt%, 0.61 wt%, 0.6 wt%, 0.59 wt%, 0.58 wt%, 0.57 wt%, 0.56 wt%, 0.55 wt%, 0.54 wt%, 0.53 wt%, 0.52 wt%, 0.51 wt%, 0.5 wt%, 0.49 wt%, 0.48 wt%, 0.47 wt%, 0.46 wt%, 0.45 wt%, 0.44 wt%, 0.43 wt%, 0.42 wt%, 0.41 wt%, 0.4 wt%, 0.39 wt%, 0.38 wt%, 0.37 wt%, 0.36 wt%, 0.35 wt%, 0.34 wt%, 0.33 wt%, 0.32 wt%, 0.31 wt%, and 0.3 wt% based on the total weight of the composition for a gelled food. For example, the guar gum may be included in an amount of 0.1 to 0.8 wt%, 0.1 to 0.7 wt%, 0.1 to 0.6 wt%, 0.1 to 0.5 wt%, 0.15 to 0.8 wt%, 0.15 to 0.4 wt%, 0.2 to 0.4 wt%, or 0.27 to 0.4 wt% based on the total weight of the composition for a gelled food.

When the content of the guar gum satisfies the above range, it is possible to control the physical properties such as viscosity of a gelled food produced using the composition for a gelled food to impart softness and smoothness to the mouthfeel of the gelled food. Particularly, it is possible to prevent oil separation caused by vegetable cream, so that the appearance, color feel, and/or mouthfeel of the gelled food may be improved.

In addition, the gelling agent may further include at least one selected from locust bean gum, gelatin, and tara gum, in addition the agar and the guar gum.

Since any suitable combination of the locust bean gum, the gelatin, or the tara gum is selected and included as a gelling agent used in the composition for a gelled food, the physical properties, such as mouthfeel, appearance, shape retainability, and/or storage stability of the gelled food may be improved.

The descriptions given above with respect to the locust bean gum, the gelatin, or the tara gum may be equally applied.

In Step (A), the total content of the gelling agent may be a content consisting of at least one lower limit selected from 0.5 wt%, 0.55 wt%, 0.6 wt%, 0.65 wt%, 0.7 wt%, 0.75 wt%, and 0.8 wt%, and 1.2 wt%, 1 wt%, 0.95 wt%, 0.9 wt%, 0.89 wt%, 0.88 wt%, 0.87 wt%, 0.86 wt%, 0.85 wt%, 0.84 wt%, 0.83 wt%, 0.82 wt%, 0.81 wt%, and 0.8 wt% based on the total weight of the composition for a gelled food. For example, the total content of the gelling agent may be a content of 0.5 to 1.2 wt%, 0.5 to 1 wt%, 0.5 to 0.9 wt%, 0.5 to 0.85 wt%, 0.6 to 0.85 wt%, 0.7 to 0.85 wt%, 0.8 to 0.85 wt%, 0.5 to 0.81 wt%, 0.55 to 0.85 wt%, 0.55 to 0.81 wt%, or 0.8 to 0.81 wt% based on the total weight of the composition for a gelled food.

When the total content of the gelling agent satisfies the above range, it is possible to control the viscosity of a gelled food produced using the composition for a gelled food to impart a soft or smooth mouthfeel thereto, and may improve shape retainability to improve room-temperature distribution stability or storage stability.

Step (B) may be a step of mixing vegetable cream with the gelled product prepared in Step (A) to impart a soft or smooth mouthfeel to the gelled food.

The vegetable cream includes a vegetable fat and an emulsifier as main components. The descriptions given above to the vegetable cream, the vegetable fat, and the emulsifier may be equally applied. In addition to the vegetable fat and the emulsifier, the vegetable cream may further include water, sugar, skim milk powder, whey powder, or a combination thereof, but is not limited thereto.

At this time, in order to achieve the above-described mouthfeel of a gelled food, the vegetable cream may be included in an amount within a range consisting of at least one lower limit selected from 7 wt%, 8 wt%, 9 wt%, and 10 wt%, and at least one upper limit selected from 14 wt%, 13 wt%, 12 wt%, and 11 wt% based on the total weight of the composition for a gelled food. For example, in Step (B), the vegetable cream may be included in an amount of 7 to 14 wt%, 8 to 14 wt%, 9 to 14 wt%, or 10 to 14 wt% based on the total weight of the composition for a gelled food.

When the content of the vegetable cream satisfies the above range, the soft mouthfeel of the gelled food may be expressed, so that it is possible to impart the mouthfeel of being smoothly melt in the mouth to the gelled food at the time of eating the gelled food.

Step (B) may include a step of stirring after mixing the gelling agent with vegetable cream.

In addition, Step (B) may include a step of adding various additives other than the vegetable cream to the gelled product, if necessary.

For example, Step (B) may include a step of further including at least one selected from an acidulant, a flavoring, a sweetener, an acidity regulator, fruit concentrate, lactic acid bacteria, a vitamin, an excipient, a colorant, an antioxidant, dietary fiber, or a combination thereof in the gelled product.

The descriptions given above may be equally applied to the additive (the acidulant, the flavoring, the sweetener, the acidity regulator, the fruit concentrate, the lactic acid bacteria, the vitamin, the excipient, the colorant, the antioxidant, or the dietary fiber).

Yet another embodiment of the present application may provide a method for producing a gelled food.

The method for producing a gelled food is a step of heat sterilizing a composition for a gelled food produced by the method for producing a composition for a gelled food described above. For the room-temperature distribution of the composition for a gelled food, a typically known method for heat sterilizing food may be used.

In addition, the method for producing a gelled food may include, before the heat sterilization step, a step of packaging a mixture prepared in Step (B). The step of packing a mixture may include a step of placing the mixture in a container, a mold, or a frame, having various shapes, to package and/or seal the mixture.

At this time, the packaging may include vacuum packaging, but is not limited thereto. Any known method for packaging food may be used.

The method for producing a gelled food may further include, after the heat sterilization step, a step of cooling the sterilized mixture. The step of cooling the sterilized mixture is a step of finally solidifying a gelled food. The method for cooling the sterilized mixture may be a method of leaving the sterilized mixture at room temperature, but is not limited thereto.

### ADVANTAGEOUS EFFECTS

A gelled food according to the present application uses a specific type of a gelling agent, and includes the gelling agent at a specific mixing ratio, thereby having a soft mouthfeel or a smooth mouthfeel. Therefore, there is an effect in that the gelled food goes down the throat smoothly at the time of eating and the sensory quality thereof is also excellent.

In addition, the gelled food has excellent shape retainability, and thus, has excellent room-temperature distribution stability or storage stability, and at the time same, the physical properties thereof, such as compression strength, hardness (degree of firmness), and viscosity, may be controlled, so that the above-described soft mouthfeel or smooth mouthfeel may be imparted to the gelled food.

Furthermore, even when vegetable cream which is added to impart a soft mouthfeel or a smooth mouthfeel is included, an oil separation phenomenon does not substantially occur in the gelled food, so that the quality of the gelled food, such as appearance, mouthfeel, tactility, savor, or flavor, may be improved.

### BRIEF DESCRIPTION OF THE DRAWINGS

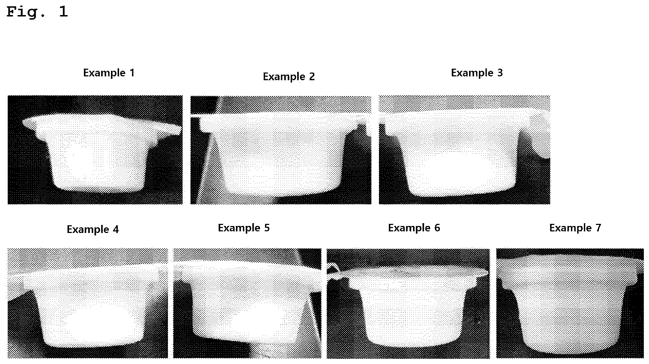

FIG. 1 are images taken of gelled foods of Examples 1 to 7 of the present application; and
FIG. 1 are images taken of gelled foods of Comparative Examples 1 to 5 of the present application.

### MODE FOR CARRYING OUT THE INVENTION

Hereinafter, the present application will be described in detail with reference to Examples.

However, the following Examples are merely illustrative of the present application, and the contents of the present application are not limited by the following Examples.

### <Examples and Comparative Examples>

In order to produce a gelled food of the present application, processes were sequentially performed in the order of gelling agent weighing - purified water mixing - stirring and heating (for 10 minutes at 80°C or higher) - vegetable cream, acidulant, flavoring, and sweetener input and stirring - filling - sterilization - cooling.

In addition, by varying the type and content of gelling agents, gelled foods of Examples 1 to 7 were produced using compositions in Table 2 below as main raw materials, and gelled foods of Comparative Examples 1 to 5 were produced using compositions in Table 3 as main raw materials. In addition to the main raw materials in Table 2 and Table 3, purified water, an acidulant (hydrous citric acid, WEIFANG, China), a flavoring (mango flavoring, Givuadan Korea, Singapore, a sweetener, and an additive were included as other raw materials.

**[Table 2]**

| Classifica tion (Unit: parts by weight) | Examp le 1 | Examp le 2 | Examp le 3 | Examp le 4 | Examp le 5 | Examp le 6 | Examp le 7 |
|---|---|---|---|---|---|---|---|
| Vegetable cream (Taeyang Chemicals, South Korea) | 14 | 14 | 14 | 14 | 14 | 14 | 14 |
| Agar (MSC, South Korea) | 0.5 | 0.4 | 0.27 | 0.27 | 0.27 | 0.2 | 0.2 |
| Guar gum (PREMCEM GUMS, India) | 0.15 | 0.4 | 0.27 | 0.27 | 0.27 | 0.2 | 0.05 |
| Locust bean gum (TATE&LYLE ITALIA SPA, Italy) | 0.15 | - | 0.27 | - | - | 0.2 | 0.1 |
| Gelatin (Sammi, South Korea) | - | - | - | 0.27 | - | 0.2 | - |
| Tara gum (SILVATEAM , Peru) | - | - | - | - | 0.27 | - | - |

**[Table 3]**

| Classification (Unit: parts by weight) | Comparative Example 1 | Comparative Example 2 | Comparative Example 3 | Comparative Example 4 | Comparative Example 5 |
|---|---|---|---|---|---|
| Vegetable cream (Taeyang Chemicals, South Korea) | 14 | 14 | 14 | 14 | 14 |
| Agar (MSC, South Korea) | 0.5 | - | - | 0.4 | - |
| Guar gum (PREMCEM GUMS, India) | - | 0.5 | - | - | 0.3 |
| Locust bean gum (TATE&LYLE ITALIA SPA, Italy) | - | - | 0.5 | - | 0.3 |
| Gelatin (Sammi, South Korea) | - | - | - | 0.4 | - |
| Tara gum (SILVATEAM , Peru) | - | - | - | - | 0.3 |

### <Experimental Example 1>

The results of evaluating the appearance of a mixture and the shape retainability of a gelled product with respect to the gelled foods of Examples 1 to 7 and the gelled foods of Comparative Examples 1 to 5 are shown in Table 3 and Table 4 below.

### Mixture appearance

The state of a mixture (composition for a gelled food composition, combination solution) prior to filling in Examples and Comparative Examples was observed with the naked eye.

(Evaluation criteria: If the mixture was uniform without particles observed therein, it was evaluated as excellent, if the mixture was uniform without particles observed therein but had viscosity, it was evaluated as good, and if the mixture had a viscosity which was too high, or had particles observed therein, it was evaluated as poor.)

### Degree of oil separation

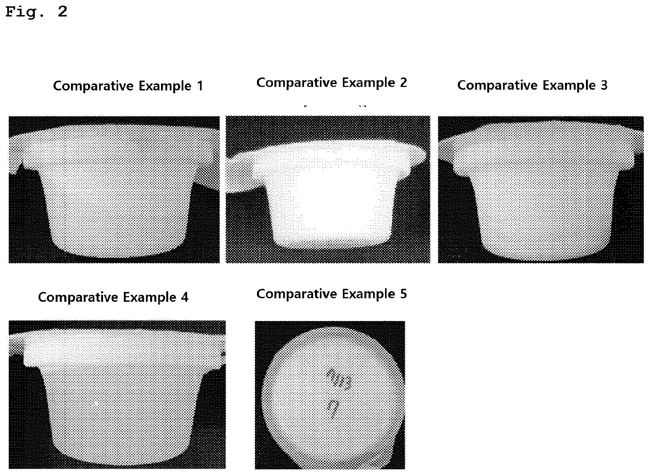

In order to compare degrees of oil separation, images taken of the gelled foods of Examples 1 to 7 are shown in FIG. 1, and images taken of the gelled foods of Comparative Examples 1 to 5 are shown in FIG. 2. The images were taken against a dark background such that the presence or absence of oil separation was visible, which was compared and evaluated with the naked eye.

(Evaluation criteria: Based on the evaluation with the naked eye, if there was no oil separation, it was evaluated as excellent, and if there was oil separation, or there were cracks observed, it was evaluated as poor.)

### Shape retainability evaluation

A portion of the gelled food produced in each of Examples and Comparative Examples was spooned, and then the appearance of the portion was observed with the naked eye.

(Evaluation criteria: If the appearance was firm, it was evaluated as excellent, if the shape was not distinct, or in a liquid phase or in a viscous liquid phase, it was evaluated as weak, and if the shape retainability was too poor to determine a shape, it was denoted by "not measurable.")

**[Table 4]**

| Classification | Example 1 | Example 2 | Example 3 | Example 4 | Example 5 | Example 6 | Example 7 |
|---|---|---|---|---|---|---|---|
| Mixture appeara nce | Excel lent | Good | Good | Excel lent | Good | Excelle nt | Excelle nt |
| Degree of oil separat ion | No oil separ ation (exce llent ) | No oil separ ation (exce llent ) | No oil separ ation (exce llent ) | No oil separ ation (exce llent ) | No oil separ ation (exce llent ) | No oil separat ion (excell ent) | Poor (Oil separat ion observe d at about 20% of the lower end) |
| Shape retaina bility | Excel lent | Excel lent | Excel lent | Excel lent | Excel lent | Weak (weak shape retaina bility) | Weak (weak shape retaina bility) |

**[Table 5]**

| Classific ation | Comparati ve Example 1 | Compara tive Example 2 | Compara tive Example 3 | Comparati ve Example 4 | Comparat ive Example 5 |
|---|---|---|---|---|---|
| Mixture appearanc e | Excellent (Slopping without being viscous) | Excelle nt | Excelle nt | Poor (Small particles with unstable emulsific ation observed) | Poor (Transpa rent particle s observed , which is determin ed to be caused by incomple te gelling due to high viscosit y) |
| Degree of oil separatio n | Poor (Oil separatio n observed at about 50% of the lower end) | Excelle nt | Poor (Cracks observe d at about 20% of the lower end) | Poor (Oil separatio n observed at 80% or greater of the lower end) | Poor (Transpa rent granules observed at the lower end) |
| Shape retainabi lity | Weak (weak shape retainabi lity) | Not measura ble (Viscou s liquid phase) | Not measura ble (Viscou s liquid phase) | Weak (weak shape retainabi lity) | Not measurab le (Viscous liquid phase) |

According to Table 4 and Table 5, Comparative Example 1 in which guar gum was not used as a gelling agent had weak shape retainability and had oil separation. Compared to Comparative Example 1, Example 1 in which agar and guar gum were simultaneously used had no oil separation and had excellent shape retainability, so that it was confirmed that guar gum should be necessarily included as a gelling agent in order to prevent oil separation of the gelled food of the present application.

Comparative Example 2 in which agar was not used as a gelling agent had no oil separation but had a problem with shape retainability. Compared to Comparative Example 2, Example 2 in which agar and guar gum were simultaneously used had no oil separation and had excellent shape retainability, so that it was confirmed that agar should be necessarily included as a gelling agent for the shape retainability of the gelled food of the present application.

Comparative Example 3 in which only the locust bean gum was used as a gelling agent had oil separation and had poor shape retainability, and thus, had a problem in that it was impossible to conduct the TA analysis. Therefore, it was confirmed that agar and guar gum should be necessarily included as a gelling agent as in Example 1 other than locust bean gum to prevent the gelled food of the present application from oil separation and to allow the gelled food to have excellent shape retainability.

### <Experimental Example 2>

For the gelled foods of Examples 1 to 7 and the gelled foods of Comparative Examples 1 to 5, the results of measuring L*, a*, and b* values of the CIE color coordinates using a colorimeter (spectrophotometer (CM-3500d, MINOLTA, Japan) are shown in Tables 6 and 7 below.

**[Table 6]**

| Classificat ion | | Examp le 1 | Examp le 2 | Examp le 3 | Examp le 4 | Examp le 5 | Examp le 6 | Examp le 7 |
|---|---|---|---|---|---|---|---|---|
| Upper layer portion | L * | 84.43 | 84.24 | 84.09 | 86.78 | 85.51 | 86.29 | 86.02 |
| | a * | -1 | -1.02 | -0.96 | -0.93 | -0.87 | -0.89 | -0.72 |
| | b * | 1.71 | 1.63 | 2.14 | 2.22 | 1.97 | 2.1 | 1.15 |
| Lower layer portion | L * | 84.28 | 84.58 | 84.04 | 85.98 | 85.35 | 86.35 | 52.4 |
| | a * | -1.01 | -1.06 | -1.01 | -0.97 | -0.89 | -0.94 | -1.28 |
| | b * | 1.82 | 1.33 | 1.86 | 1.52 | 1.92 | 2.14 | -4.08 |
| L* difference ( upper layer portionlower layer portion\|) | | 0.15 | 0.34 | 0.05 | 0.8 | 0.16 | 0.06 | 33.62 |

**[Table 7]**

| Classifica tion | | Comparat ive Example 1 | Comparat ive Example 2 | Comparat ive Example 3 | Comparat ive Example 4 | Comparat ive Example 5 |
|---|---|---|---|---|---|---|
| Upper layer portion | L * | 88.82 | 83.05 | 82.71 | 90.78 | 80.99 |
| | a * | -0.77 | -0.74 | -0.7 | -0.73 | -0.81 |
| | b * | 2.04 | 0.16 | -0.21 | 1.87 | 0.33 |
| Lower layer portion | L * | 65.66 | 83.66 | 53.21 | 48.4 | 81.03 |
| | a * | -1.21 | -0.71 | -0.63 | -0.31 | -0.81 |
| | b * | -3.08 | 0.34 | -2.94 | 1.32 | 0.33 |
| L* difference ( \| upper layer portionlower layer portion \|) | | 23.16 | 0.61 | 29.5 | 42.38 | 0.04 |

According to Table 6 and Table 7, in the cases of Comparative Example 1, Comparative Example 3, and Comparative Example 4 in which guar gum was not used as a gelling agent, there was oil separation, so that it was confirmed that the difference in L* between the upper layer portion and the lower layer portion was great. In the cases of Example 1 to Example 6, it was confirmed that the difference in L* between the upper layer portion and the lower layer portion was 0.8 or less, which means that oil separation does not occur in the gelled food of the present application.

### <Experimental Example 3>

Among Examples and Comparative Examples, except for Comparative Example 2, Comparative Example 3, and Comparative Example 5, which are samples each of whose shape retainability was not measurable, the results measured using a Texture Analyzer (TA XT-plus, Stable Micro System, UK) for the gelled foods of Examples 1 to 7 and the gelled foods of Comparative Example 1, and 4 are shown in Table 9 below. The TA analysis results were measured three times to determine an average value.

The measurement conditions are as follows.

**[Table 8]**

| Sample amount: 90 g | |
|---|---|
| Items | Conditions |
| Probe | Circular shape, diameter 35 mm |
| Pre-test speed | 5 mm/sec |
| Test speed | 2 mm/sec |
| Post-test speed | 2 mm/sec |
| Pressure | 98% compression |
| Height | 50 mm |

It was determined that the height of the first peak was compression strength, the difference value between the first peak and the negative peak was fracturability, the height of the second peak was hardness (degree of firmness), and the absolute value of the second negative peak was viscosity.

**[Table 9]**

| Classification | Number of measurements | Compression strength (N) | Fractur ability (Fractu rability) (N) | Hardness (Hardness (Degree of firmness)) (N) | Viscosity (Viscosity) (N) |
|---|---|---|---|---|---|
| Example 1 | 1 | 2.46 | 0.87 | 11.8 5 | 1.24 |
| | 2 | 2.08 | 0.4 | 10.3 | 1.14 |
| | 3 | 1.86 | 0.28 | 8.88 | 0.93 |
| | Average | 2.13 | 0.52 | 10.3 7 | 1.10 |
| Example 2 | 1 | 1.93 | 0.73 | 9.11 | 1.1 |
| | 2 | 1.7 | 0.49 | 8.79 | 1.1 |
| | 3 | 1.81 | 0.41 | 8.75 | 0.97 |
| | Average | 1.81 | 0.54 | 8.88 | 1.06 |
| Example 3 | 1 | 1.52 | 0.19 | 10.8 5 | 1.12 |
| | 2 | 1.66 | 0.26 | 11.3 6 | 1.19 |
| | 3 | 1.51 | 0.21 | 10.4 3 | 1.27 |
| | Average | 1.56 | 0.22 | 10.8 8 | 1.19 |
| Example 4 | 1 | 0.73 | 0.07 | 7.79 | 1.26 |
| | 2 | 0.65 | 0.04 | 8.29 | 1.28 |
| | 3 | 0.54 | 0.05 | 8.79 | 1.01 |
| | Average | 0.64 | 0.05 | 8.29 | 1.18 |
| Example 5 | 1 | 0.84 | 0.05 | 9.03 | 1.07 |
| | 2 | 0.84 | 0.06 | 10.8 2 | 1.28 |
| | 3 | 0.78 | 0.03 | 9.48 | 0.99 |
| | Average | 0.82 | 0.05 | 9.78 | 1.11 |
| Example 6 | 1 | 0.56 | 0.16 | 8.15 | 1.39 |
| | 2 | 0.52 | 0.15 | 8.58 | 1.09 |
| | 3 | 0.48 | 0.13 | 7.56 | 1.12 |
| | Average | 0.52 | 0.15 | 8.10 | 1.20 |
| Example 7 | 1 | 0.42 | 0.09 | 7.65 | 0.89 |
| | 2 | 0.42 | 0.08 | 7.34 | 0.87 |
| | 3 | 0.4 | 0.1 | 6.31 | 0.84 |
| | Average | 0.41 | 0.09 | 7.10 | 0.87 |
| Comparativ e Example 1 | 1 | 0.5 | 0.03 | 6.45 | 0.69 |
| | 2 | 0.48 | 0.04 | 7.37 | 0.77 |
| | 3 | 0.48 | 0.04 | 7.02 | 0.75 |
| | Average | 0.49 | 0.04 | 6.95 | 0.74 |
| Comparativ e Example 4 | 1 | 0.48 | 0.06 | 5.32 | 0.79 |
| | 2 | 0.49 | 0.04 | 4.33 | 0.59 |
| | 3 | 0.46 | 0.05 | 6.37 | 0.93 |
| | Average | 0.48 | 0.05 | 5.34 | 0.77 |

According to Table 9, in the cases of Comparative Example 2, Comparative Example 3, and Comparative Example 5 in which agar, which affects the shape retainability of a gelled food, was not included as a gelling agent, it was impossible to conduct the TA analysis. Meanwhile, Comparative Example 1 and Comparative Example 4 in which agar was included as a gelling agent respectively had a hardness (degree of firmness) of 6.95 (N) and 5.34 (N) since guar gum was not used together. Therefore, it was confirmed that the shape retainability required of a gelled food of the present application was not satisfied.

That is, in order to allow the gelled food of the present application to smoothly melt in the mouth while maintaining the shape retainability of the gelled food, agar is required as a gelling agent. However, it was confirmed that it was only possible to achieve desired physical properties when guar gum was used together, instead of using agar alone.

## Claims

1. A composition for a gelled food comprising:
vegetable cream; and
a gelling agent including agar and guar gum.

2. The composition of claim 1, wherein the content of the vegetable cream is 7 to 14 wt% based on the total weight of the composition for a gelled food.

3. The composition of claim 1, wherein in the vegetable cream, a vegetable fat is included in an amount of 25 to 35 wt% based on the total weight of the vegetable cream.

4. The composition of claim 1, wherein based on the total weight of the composition for a gelled food, the agar is included in an amount of 0.25 to 0.7 wt%, and the guar gum is included in an amount of 0.1 to 0.8 wt%.

5. The composition of claim 4, wherein the total content of the gelling agent is 0.5 to 1.2 wt% based on the total weight of the composition for a gelled food.

6. The composition of claim 1, wherein the gelling agent further comprises at least one selected from locust bean gum, gelatin, and tara gum.

7. The composition of claim 6, wherein based on the total weight of the composition for a gelled food, the locust bean gum is included in an amount of 0.1 to 0.5 wt%, the gelatin is included in an amount of 0.1 to 0.5 wt%, or the tara gum is included in an amount of 0.1 to 0.5 wt%.

8. The composition of claim 1, further comprising at least one selected from an acidulant, a flavoring, a sweetener, an acidity regulator, fruit concentrate, lactic acid bacteria, a vitamin, an excipient, a colorant, an antioxidant, dietary fiber, or a combination thereof.

9. A gelled food comprising the composition for a gelled food of any one of claim 1 to claim 8.

10. The gelled food of claim 9, wherein the gelled food has a compression strength of 0.6 to 2.5 N.

11. The gelled food of claim 9, wherein the gelled food has a hardness of 8.2 to 11.5 N.

12. The gelled food of claim 9, wherein the difference in brightness L* between the CIE color coordinate value of an upper layer portion and that of a lower layer portion of the gelled food is 0.8 or less.

13. The gelled food of claim 9, wherein the gelled food comprises at least one selected from the group consisting of jelly, spread, and pudding.

14. A method for preparing a composition for a gelled food, the method comprising:
(A) mixing a gelling agent which includes agar and guar gum in water to prepare a gelled product; and
(B) mixing the gelled product with vegetable cream to prepare a mixture.

15. The method of claim 14, wherein the step of preparing the gelled product comprises mixing the gelling agent with water and then maintaining a gelling temperature of 80°C or higher.

16. A method for preparing a gelled food, the method comprising heat sterilizing a composition for a gelled food produced by the method for preparing a composition for a gelled food of claim 14 or claim 15.
